# EUROPEAN PATENT SPECIFICATION

(11) **EP 0 541 727 B1**
(45) Date of publication and mention of the grant of the patent: **17.11.1999**
(21) Application number: 91917680.0
(22) Date of filing: 30.07.1991
(51) Int. Cl.: H04L 9/00, H04L 9/32

(54) **METHOD FOR SECURE TIME-STAMPING OF DIGITAL DOCUMENTS**
VERFAHREN ZUR SICHEREN ZEITSTEMPELUNG VON DIGITALEN DOKUMENTEN
PROCEDE D'HORODATAGE SUR DE DOCUMENTS NUMERIQUES

(30) Priority: 02.08.1990 US 561888; 08.03.1991 US 666896
(43) Date of publication of application: 19.05.1993
(73) Proprietor: BELL COMMUNICATIONS RESEARCH, INC., Livingston, New Jersey 07039-2729 (US)
(72) Inventor: HABER, Stuart, Alan, New York, NY 10003 (US); STORNETTA, Wakefield, Scott, Jr., Morristown, NJ 07960 (US)
(74) Representative: Dubois-Chabert, Guy
(86) International application number: US9105386
(87) International publication number: WO9203000

(56) References cited:
- US-A- 4 145 568
- US-A- 4 206 315
- PATENT ABSTRACTS OF JAPAN vol. 10 no. 240 (E-429) ,19 August 1986 & JP-A-61 072436 (FUJITSU LIMITED) 14 April 1986,
- IBM TECHNICAL DISCLOSURE BULLETIN, vol. 26, no. 1, June 1983 NEW YORK US, pages 199-201, HOPKINS 'Transaction incrementing message authentication key'
- IBM TECHNICAL DISCLOSURE BULLETIN, vol. 25, no. 1, June 1982 NEW YORK US, page 279 SVIGALS 'Dynamic communication key accumulated from previous message content'

## Description

### BACKGROUND OF THE INVENTION

In many situations there is a need to establish the date on which a document was created and to prove that the text of a document in question is in fact the same as that of the original dated document. For example, in intellectual property matters it is often crucial to verify the date on which a person first put into writing the substance of an invention. A common procedure for thus "time-stamping" an inventive concept comprises daily notations of one's work in a laboratory notebook.
Indelibly dated and signed entries are made one after another on each page of the notebook where the sequentially numbered, sewn-in pages make it difficult to revise the record without leaving telltale signs. The validity of the record is further enhanced by the regular review and signed witnessing by a generally disinterested third party. Should the time of the concept become a matter for later proof, both the physical substance of the notebook and the established recording procedure serve as effective evidence in substantiating the fact that the concept existed at least as early as the notebook witness date.

The increasingly widespread use of electronic documents, which include not only digital representations of readable text but also of video, audio, and pictorial data, now poses a serious threat to the viability of the "notebook" concept of establishing the date of any such document. Because electronic digital documents are so easily revised, and since such revisions may be made without telltale sign, there is available limited credible evidence that a given document truly states the date on which it was created or the message it originally carried. For the same reasons there even arises serious doubt as to the authenticity of a verifying signature. Without an effective procedure for ensuring against the surreptitious revision of digital documents, a basic lack of system credibility prevents the efficiencies of electronic documentation from being more widely implemented.

Some procedures are presently available for verifying electronic document transmissions; however, such procedures are limited in application to bilateral communications. That is, in such communications the sender essentially desires to verify to the receiver the source and original content of the transmitted document. For example, "private key" cryptographic schemes have long been employed for message transmission between or among a limited universe of individuals who are known to one another and who alone know the decrypting key. Encryption of the message ensures against tampering, and the fact that application of the private key reveals the "plaintext" of the transmitted message serves as proof that the message was transmitted by one of the defined universe. The time of creation of the message is only collaterally established, however, as being not later than its receipt by the addressee. This practice thus fails to provide time-stamp evidence that would be useful in an unlimited universe at a later date.

A more broadly applicable verifying communication procedure, that of "public key" cryptography, has been described by Diffie and Hellman ("New Directions in Cryptography", IEEE Transactions On Information Theory, Vol. IT-22, November 1976, pp. 644-654) and more recently implemented by Rivest et al. in U.S. Patent 4,405,829, issued 20 September 1983. While this scheme expands the utilizing universe to a substantially unlimited number of system subscribers who are unknown to one another, but for a public directory, verifiable communications remain bilateral. These limitations persist, since although a public key "signature", such as that which entails public key decryption of a message encrypted with the private key of the transmitter, provides any member of the unlimited universe with significant evidence of the identity of the transmitter of the message, only a given message recipient can be satisfied that the message existed at least as early as the time of its receipt. Such receipt does not, however, provide the whole universe with direct evidence of time of the message's existence. Testimony of a such a recipient in conjunction with the received message could advance the proof of message content and time of its existence, but such evidence falls victim to the basic problem of ready manipulation of electronic digital document content, whether by originator or witness.

Thus, the prospect of a world in which all documents are in easily modifiable digital form threatens the very substance of existing procedures for establishing the credibility of such documents. There is clearly a significant present need for a system of verification by which a digital document may be so fixed in time and content that it can present, at least to the extent currently recognized in tangible documents, direct evidence on those issues.

The abstract of JP-A-61 072 436 discloses a method according to the preamble of claim 1.

### SUMMARY OF THE INVENTION

The present invention consists of a method of time stamping a digital document as claimed in claim 1.

The method of the present invention presumes a number of document authors distributed throughout a communication network. Such authors may be individuals, companies, company departments, etc. each representing a distinct and identifiable, e.g. by ID number or the like, member of the author universe. In one embodiment of the invention, this universe may constitute the clientele of a time-stamping agency (TSA), while in another embodiment the distributed authors may serve as agents individually performing the time-stamping service for other members of the universe.

The TSA may time-stamp the document to create a receipt by adding digital data signifying the current time, concatenate the receipt with the current cryptographic catenation of its prior time stamp receipts, and create a new catenation from the composite document by means of a deterministic function, such as discussed in greater detail below. The resulting catenate value is then included with time and other identifying data to yield the certificate.

To ensure against interception of confidential document information during transmission to the TSA, and to reduce the digital bandwidth required for transmission of an entire document, the author may optionally convert the digital document string to a unique value having vastly condensed digital size by means of a deterministic function which may, for example, be any one of a number of algorithms known in the art as "one-way hash functions". Such an application of hash functions has been described, among others, by Damgard in his discussions on the improvement of security in document signing techniques ("Collision-Free Hash Functions and Public Key Signature Schemes", Advances in Cryptology -- Eurocrypt '87, Springer-Verlag, LNCS, 1988, Vol. 304, pp. 203-217). In practice of the present invention, however, the "one-way" characteristic typical of a hashing algorithm serves an additional purpose; that is, to provide assurance that the document cannot be secretly revised subsequent to the time the TSA applies its time stamp or incorporates the document into the catenate certificate.

A hashing function provides just such assurance, since at the time a document, such as an author's original work or a composite receipt catenation, is hashed there is created a representative "fingerprint" of its original content from which it is virtually impossible to recover that document. Therefore, the time-stamped document is not susceptible to revision by any adversary of the author. Nor is the author able to apply an issued time-stamp certificate to a revised form of the document, since any change in the original document content, even to the extent of a single word or a single bit of digital data, results in a different document that would hash to a completely different fingerprint value. Although a document cannot be recovered from its representative hash value, a purported original document can nonetheless be proven in the present time-stamping procedure by the fact that a receipt comprising a true copy of the original document representation will always hash to the original number or the same catenate value as is contained in the author's certificate, assuming use of the original hashing algorithm.

Any available deterministic function, e.g. a one-way hash function such as that described by Rivest ("The MD4 Message Digest Algorithm", Advances in Cryptology -- Crypto '90, Springer-Verlag, LNCS), may be used in the present procedure. In the practice of the invention, such a hashing operation is optionally employed by the author to obtain the noted benefit of transmission security, although it might be effected by the TSA if the document were received in plaintext form. In whatever such manner the document content and incorporated time data are fixed against revision, there remains the further step, in order to promote the credibility of the system, of certifying to the members of an as yet unidentified universe that the receipt was in fact prepared by the TSA, rather than by the author, and that the time indication is correct, i.e., that it has not, for instance, been fraudulently stated by the TSA in collusion with the author.

In one embodiment, the TSA maintains a record of its sequential time-stamping transactions by adding each new receipt to its current catenation and applying its deterministic function, e.g. hashing, the composite to obtain a new catenation. This catenation, itself a value resulting from the hashing process, is included on the receipt or certificate returned to the author and serves to certify the indicated time stamp. Confirmation of the certificate at a later time involves rehashing the combination of the author's time receipt and the next previous catenate value in the TSA records. The resulting generation of the author's catenate certificate value proves to the author and to the universe at large that the certificate originated with the TSA. This result also proves the veracity of the time-stamp itself, since all original elements of the original receipt must be repeated in order to again generate, by the hashing function, the original catenate certificate value.

The invention is mainly directed to a method of time-stamping a digital document which comprises transmitting in a communications network to an outside agency a digital representation of said digital document, creating at said outside agency a receipt comprising a digital representation of then current time and at least a portion of a digital representation of said digital document, and certifying said receipt at said outside agency characterized in that the certifying of said receipt comprises including with said receipt a time representation and digital document representation specific to at least one other digital document receipted by said outside agency.

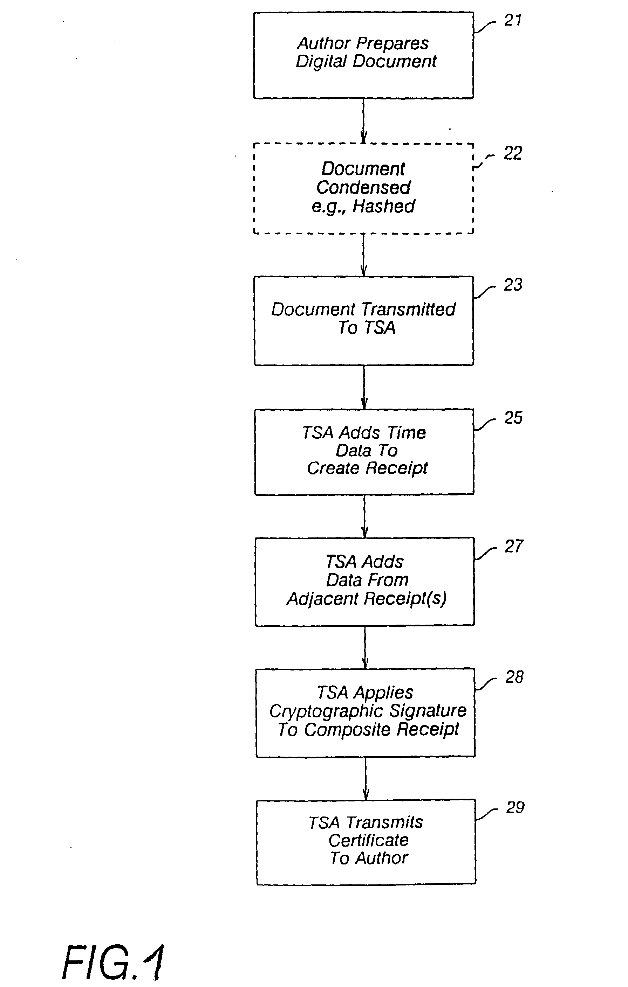

The method of the invention as generally depicted in FIG. 1, draws upon the relatively continuous flow of documents from the universe of authors through the facilities of the TSA. For each given processed document, Dₖ, the TSA generates a time-stamp receipt which includes, for example, a sequential receipt number, rₖ, the identity of the author, Aₖ, by ID number, IDₖ, or the like, the hash, Hₖ, of the document, and the current time, tₖ. In addition, the TSA includes the receipt data of the immediately preceding processed document, Dₖ₋₁, of author, Aₖ₋₁, thereby bounding the time-stamp of document, Dₖ, in the "past" direction by the independently established earlier receipt time, tₖ₋₁. Likewise, the receipt data of the next received document, Dₖ₊₁, are included to bound the time-stamp of document, Dₖ, in the "future" direction. The composite receipt, now containing the time data of the three, or more if desired, sequential time-stamp receipts, or identifying segments thereof, is then certified with the cryptographic TSA signature and transmitted to the author, Aₖ. In like manner, a certificate containing identifiable representations of Dₖ and Dₖ₊₂ would be transmitted to author,Aₖ₊₁. Thus, each of the time-stamp certificates issued by the TSA is fixed in the continuum of time and none can be falsely prepared by the TSA, since a comparison of a number of relevant distributed certificates would reveal the discrepancy in their sequence. So effective is such a sequential fixing of a document in the time stream that the TSA signature could be superfluous in actual practice.

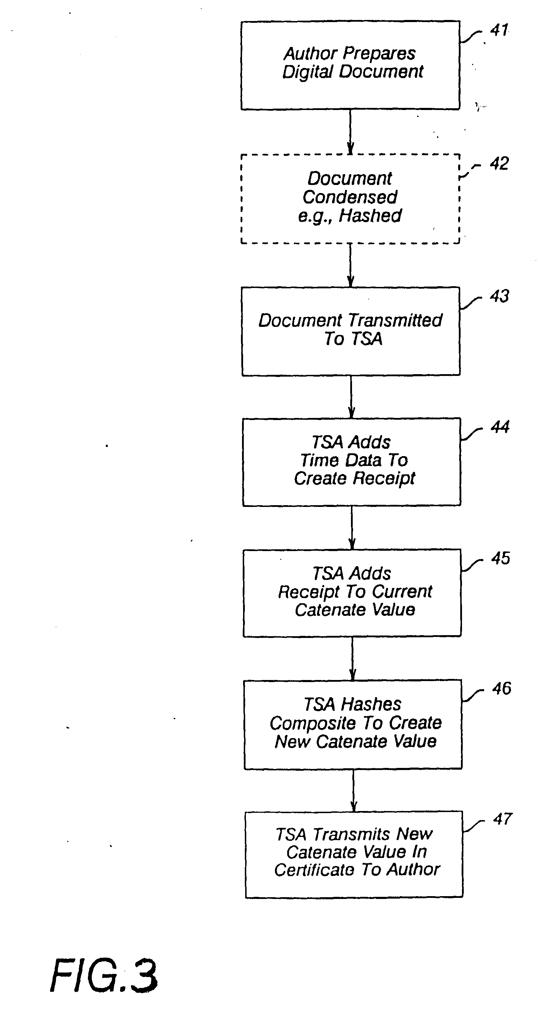

In an additional embodiment shown in FIG. 3, the TSA generates a time-stamp receipt which includes, for example, a sequential receipt transaction number, rₖ, the identity of the author, for example by ID number, IDₖ, or the like, a digital representation, e.g. the hash, Hₖ, of the document, and the current time, tₖ. The TSA then includes these receipt data, or any representative part thereof, with the catenate certificate value, Cₖ₋₁, of the immediately preceding processed document, Dₖ₋₁, of author, Aₖ₋₁, thereby bounding the time-stamp of document, Dₖ, by the independently established earlier receipt time, tₖ₋₁.

The composite data string, (r_{k,} ID_{k,} H_{k,} t_{k,} Cₖ₋₁), is then hashed to a new catenate value, Cₖ, that is entered with transaction number, rₖ, in the records of the TSA, and is also transmitted to Aₖ, as the catenate certificate value, with the time-stamp receipt data. In like manner, a certificate value derived from the hashing of Cₖ with time stamp elements of the receipt for document, Dₖ₊₁, would be transmitted to author, Aₖ₊₁. Thus, each of the time-stamped catenate certificates issued by the TSA is fixed in the continuum of time and none can be falsely prepared by the TSA, since any attempt to regenerate a catenate certificate number from a hash with the next prior certificate would reveal the discrepancy.

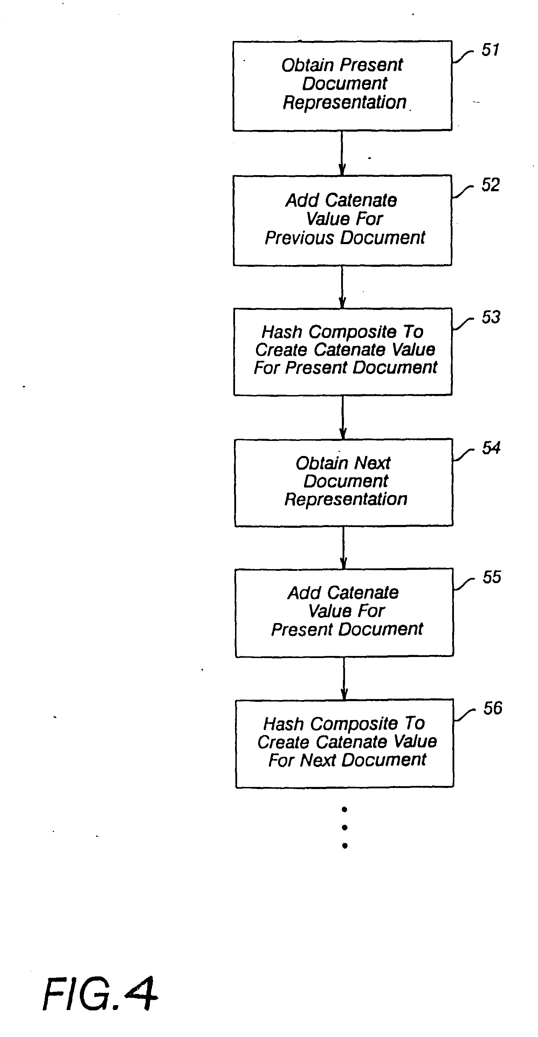

In a more general application of the invention, as shown in FIG. 4, the representation, e.g., a hash, of a particular document is simply concatenated with the catenate certificate value of the next previous document and the deterministic function representation, again a hash, for example, of this composite is then generated and retained as the record catenate value for the particular document. Each subsequent document in the growing series is similarly processed to expand the record which itself would serve as a reliable certification of the position each such document occupies in the series, or more broadly viewed, in the continuum of time. This embodiment of the invention provides a reliable method by which an organization, for instance, could readily certify the sequence and continuity of its digital business documents and records.

Additional variations in the process of the invention might include the accumulation of documents, preferably in hashed or other representative form, generated within an author organization over a period of time, e.g. a day or more depending upon the extent of activity, with the collection being hashed to present a single convenient document for time-stamping and certification. Also, the initial seed for the pseudorandom generator may be based upon a function of time or previously receipted documents, as well as of the document. As an alternative, an organizational designee might serve as a resident "outside" agency who would maintain a catenate certificate record of organization documents by means of the present procedure and on a regular basis would transmit the then current catenate certificate to a TSA. In this manner the sequence of an organization's business records would be established both within the organization and externally through the TSA.

Also, the implementation of process embodiments might readily be automated in simple computer programs which would directly carry out the various steps of hashing, transmitting, and concatenating original document representations, applying current time stamps, generating and recording catenate certificate values, and providing receipt certificates.

### THE DRAWING

The present invention will be described with reference to the accompanying drawings of which:
FIG. 1 is a flow diagram of a specific embodiment of the process according to the invention;
FIG. 2 is a flow diagram of another specific embodiment of the process not forming part of the invention.
FIG. 3 is a flow diagram of an alternative embodiment of the time-stamping process according to the invention; and
FIG. 4 is a flow diagram of a general catenation process according to the invention.

### DESCRIPTION OF THE INVENTION

The following examples of the application of embodiments of the present invention will serve to further describe the involved process. For convenience in the presentation of these examples, the deterministic function selected is the md4 hashing algorithm described by Rivest, as mentioned above, and the verifiable signature scheme is the public key method suggested by Diffie and Hellman, as implemented by Rivest et al. in U.S. Patent 4,405,829. The function actually selected by a TSA could be any of various available algorithms. Whatever algorithm is implemented, records of its identity and period of use must be maintained for later proof of certified receipts. Further, in order to simplify explanation of the process and for the additional reasons noted below, only representative segments of the entire numbers will be employed.

The receipt-linking embodiment of the invention shown in FIG. 1 is initially considered. Although the present process may be used with documents of any length, the following apt excerpt is amply representative of a document, Dₖ, which an author prepares at step 21 and for which time-stamping is desired:
Time's glory is to calm contending kings,
To unmask falsehood, and bring truth to light,
To stamp the seal of time in aged things,
To wake the morn, and sentinel the night,
To wrong the wronger till he render right;

### The Rape of Lucrece

By means of the md4 algorithm, the document is hashed, at optional, dashed step 22 to a number, Hₖ, of a standard 128 bit format which expressed in base 16 appears as:
ef6dfdcd833f3a43d4515a9fb5ce3915
The author, Aₖ, whose system identification number, IDₖ, is 172 in a 1000 member author universe, transmits the thus-identified document to the system TSA, at step 23, as the message, (ID_{k,} Hₖ), which appears:
172, ef6dfdcd833f3a43d4515a9fb5ce3915
as a request that the document be time-stamped.

The TSA then prepares the receipt for document, Dₖ, by adding, at step 25, a sequential receipt number, rₖ, of 132, for example, and a statement of the current time, tₖ. This time statement might include a standard 32 bit representation of computer clock time plus a literal statement, i.e. 16:37:41 Greenwich Mean Time on 10 March 1990, in order to allow the final time-stamp certificate to be easily readable by the author, Aₖ. The receipt would then comprise the string, (r_{k,} t_{k,} ID_{k,} Hₖ).

At this point it would be appropriate to further consider the earlier-mentioned reduction of number size to representative segments. As is described by Rivest et al. in U.S. Patent 4,405,829, the cryptographic public key scheme to be employed in this example (generally known in the field as the "RSA" signature scheme) requires the division of an extended message into blocks that may each be represented by a number not exceeding the encoding key number element, n. Each such block is then signed with the RSA algorithm, to be reassembled after transmission. Therefore, in order to be able to use a number, n, of reasonable size in this example while maintaining a single block for the final receipt string to be certified with the RSA scheme, each element of the receipt string will be reduced to a representative eight bits, typically the last eight bits of any overlong string, and those bits will be stated in base 16 to present a two hexadecimal character string. Thus, for instance, the 128 bit document hash, Hₖ, will be represented by its last eight bits, i.e. 0001 0101, stated as 15 (base 16). Likewise, IDₖ, 172, is 1010 1100 and is represented by ac (base 16). Without actually undertaking the calculation, it will suffice to assume that the time statement, tₖ, is represented as 51. The receipt number, 132, would be represented as 84. The receipt string to this point, i.e. (r_{k,} t_{k,} ID_{k,} Hₖ) now appears as 8451ac15.

Assume now that the immediately preceding document, Dₖ₋₁, was processed by the TSA as the request:
201, d2d67232a61d616f7b87dc146c575174
at 16:32:30 on 10 March 1990 (tₖ₋₁ being represented as 64). The TSA adds these data, at step 27, to the receipt string for Dₖ to yield the hexadecimal representation, 8451ac1564c974. This receipt, Rₖ, now contains data fixing the time for Dₖ and a time, tₖ₋₁, before which author, Aₖ, cannot claim that Dₖ existed. This limitation on Aₖ is established by the fact that the previous author, Aₖ₋₁, holds a time certificate, Cₖ₋₁, that fixes tₖ₋₁ as subsequent to the linked time data, tₖ₋₂, in the certificate of author, Aₖ₋₂, and so on for as long as a proof requires.

To establish that TSA in fact originated the receipt for document, Dₖ, that receipt is transmitted, at step 29, to author, Aₖ, after TSA signing, at step 28, with the public key cryptographic signature scheme and becomes the certified receipt, or certificate, Cₖ. With the data derived above, and assuming that TSA has the RSA signature key set, in decimal:
<n,e> = <43200677821428109,191> (Public)
<n,d> = <43200677821428109,29403602422449791> (Private)
the signed certificate for Rₖ, 8451ac1564c974, would compute as:
R^{d} mod n = 39894704664774392
When author, Aₖ, receives this certificate, Cₖ, along with the literal statement of Rₖ, it may be readily confirmed as being correct by application of the TSA public key to verify that:
Cₖ^{e} mod n = Rₖ
and that Rₖ in fact contains the data representing the document hash, Hₖ.

The procedure shown in this simple one-link example results in a certificate which, being bounded in time by the data from document, Dₖ, provides author, Aₖ₋₁ with reliable evidence that document, Dₖ₋₁, was not backdated to a time significantly prior to the existence of document, Dₖ. When the certificate of Aₖ is expanded with additional data from the subsequently processed document, Dₖ₊₁, it will likewise be effectively bounded to substantiate the time stamp claimed by Aₖ. In an alternative of the same effect, Aₖ could simply be advised of the identity of Aₖ₊₁ and could confirm from that author that the one-link certificate, Cₖ₊₁, contained the element, Hₖ. The procedure could also be varied to provide certified receipts which include data from any number of authors, with each addition providing a further degree of assurance against falsification.

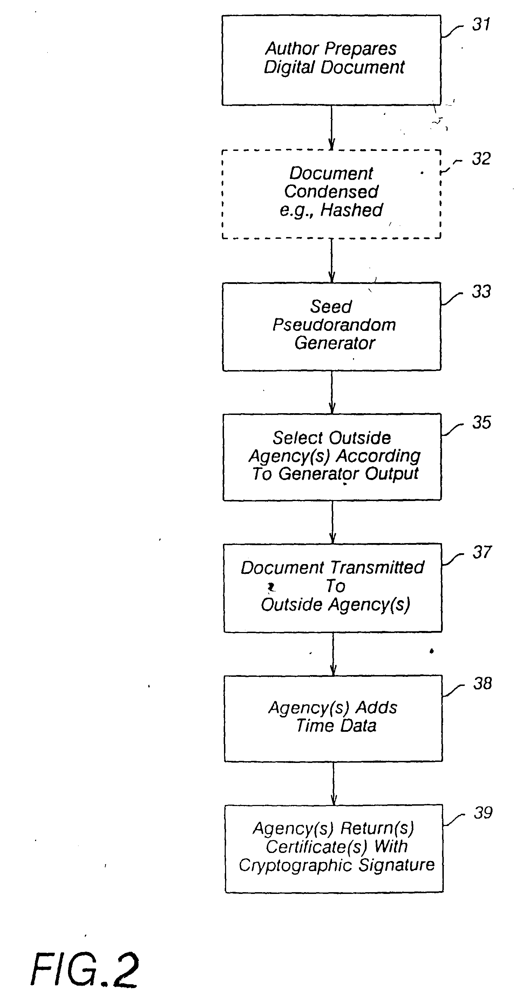

Another embodiment, not forming part of the invention, as shown in FIG. 2, which utilizes randomly selected members of the author universe as time-stamping agents, or witnesses, i.e. a "distributed trust" procedure, would proceed in the following manner. Although these numbers are not so limited in actual practice, for purposes of the example it will be assumed that the universe consists of 1000 authors, having IDs 0-999, and that three witnesses will be sufficient to establish the veracity of the time stamp. Also, in this example the earlier-noted variation including the services of a TSA is being implemented. The hashing function, md4, utilized in the above example is employed here also, in optional step 32, as an example of a deterministic document function which will seed the pseudorandom selection of the three witnesses from the author universe.

As in the previous example, the author transmits the document to the TSA, normally in hashed form, as the identified request:
172, ef6dfdcd833f3a43d4515a9fb5ce3915
The TSA now uses this document hash string, in step 33, as the seed to generate the ID number of the first witness, at step 35, according to the selection algorithm:
ID = [md4 (seed)] mod (universe size)
The resulting seed hash:
26fs4eae92511dbbse06e7c2de6e0fcf
represents the 128 bit number which mod 1000 is 487, the ID of the first selected witness. The next witness is likewise chosen using this seed hash representation as the seed in the second selection computation to yield:
882653ee04d16b1f0d604883aa27300b
which mod 1000, is 571, the second witness ID. A repeat of the computation, again seeding with the prior seed hash, selects the final witness as 598, which is:
2fe8768ef3532f15c40acf1341902cle mod 1000

The TSA now sends, at step 37, a copy of the original request to each of these three witnesses who individually, at step 38, add a current time statement and ID, and certify the resulting receipts by signing with the RSA cryptographic signature scheme and transmitting them, at step 39, directly to the author or through the TSA who may assemble the certificates into a file to be delivered to the author. By virtue of the fact that the pseudorandom generation prevents the exercise of a personal choice in the selection of witnesses, the author is deterred by the risk of encountering a non-cooperative witness from attempting any communication prior to time stamp certification for the purpose of arranging for a false time entry. In a process variant where the author is allowed to transmit the request directly to witnesses, the random selection of such witnesses which is keyed essentially to the involved document itself frustrates any attempt by the author to direct the document to a known cooperative witness. The group of resulting certificates may thus be employed with confidence in later proofs employing signature verification in the manner earlier described.

The catenate certificate embodiment of the time-stamping procedure begins, as at step 41 in FIG. 3 of the drawing, with the preparation of a digital document by the author, e.g. Aₖ. As previously noted, this digital document may be the digital form or representation of any alphanumeric text or video, audio, pictorial or other form of fixed data. Although the present process may be used with documents of any length, the following excerpt is amply representative of a document, Dₖ, for which time-stamping is desired:
... the idea in which affirmation of the world and ethics are contained side by side ... the ethical acceptance of the world and of life, together with the ideals of civilization contained in this concept ... truth has no special time of its own. Its hour is now -- always.
Schweitzer

If the author so desires, the document, Dₖ, may, for the purposes of security as well as to reduce the required transmission bandwidth, be condensed by means, for example, of the md4 algorithm. As indicated by the optional, dashed step 42, the document is thus hashed to a value, Hₖ, of a standard 128 bit format which, expressed in base 16, appears as:
ee2ef3ea60df10cb621c4fb3f8dc34c7
It should be noted at this point that the hexadecimal and other numerical value representations used in this example are not in such form crucial to the implementation of the invention. That is to say, any portion or other distinct representation of those values selected according to a given procedure would function as well.

Author, Aₖ, whose assigned identification number, IDₖ, is 634 in a 1000 member author universe, then transmits the document, at step 43, to the system TSA in the identifying message, (ID_{k,}Hₖ), which appears:
634, ee2ef3ea60df10cb621c4fb3f8dc34c7
as a request that the document be time-stamped.

The TSA, at step 44, prepares the receipt for document, Dₖ, by adding a sequential receipt transaction number, rₖ, of 1328, for example, and a statement of the current time, tₖ. This time statement might be a standard binary representation of computer clock time or simply a literal statement, e.g., 19:46:28 Greenwich Mean Time on 6 March 1991, in order to allow the final time-stamp certificate to be easily read. The receipt then comprises the string, (r_{k,} t_{k,} ID_{k,} Hₖ), which appears as follows:
1328, 194628GMT06MAR91, 634,
ee2ef3ea60df10cb621c4fb3f8dc34c7

In accordance with the invention, the records of the TSA at this time contain a catenation of all its prior receipt transactions in the form, for example, of the values resulting from the hashing of each consecutive receipt with the record catenation to that time. This catenate record would thus have been developed as follows. The receipt of first transaction (rₖ = 1) was hashed with an initial datum value, e.g., the hash of the identification of the TSA, to yield the first catenate value, C₁, which was then used as the certificate value for that first transaction. In the next transaction, the receipt was concatenated with C₁ and the composite hashed to yield the second catenate certificate value, C₂, and so on through the entire history of the TSA time-stamping operation.

Assume now that the document, Dₖ₋₁, immediately preceding that of the present example had been processed by the TSA, in its 1327th receipt transaction, to yield as the catenate certificate value, Cₖ₋₁:
26f54eae92516b1f0d6047c2de6e0fcf
In step 45 of the process, the TSA now concatenates with this value the receipt for Dₖ to obtain:
26f54eae92516b1f0d6047c2de6e0fcf, 1328,
194628GMT06MAR91, 634, ee2ef3ea60df10cb621c41 3f8dc34c7
This composite is then hashed by the TSA, at step 46, to yield as the new catenate certificate value, Cₖ:
46f7d75f0fbea95e96fc38472aa28ca1

The TSA then adds this value to its records and prepares and transmits to author, Aₖ, at step 47, a time-stamp certificate, including this catenate certificate value, which might appear as:

| | |
|---|---|
| Transaction Number | 1328 |
| Client ID Number | 634 |
| Time | 19:46:28 Greenwich Mean Time |
| Date | 06 March 1991 |
| Certificate Number | 46f7d75f0fbea95e96fc38472aa28ca1 |

The procedure would be repeated by the TSA for each subsequent time stamp request. Assuming the next request from Aₖ₊₁ was received with the document in the form of its hash, Hₖ₊₁, as:
201, 882653ee04d511dbb5e06883aa27300b
at 19:57:52 GMT on 6 March 1991, the composite concatenation would appear:
46f7d75f0fbea95e96fc38472aa28ca1, 1329,
195752GMT06MAR1991, 201, 882653ee04d511dbb5e06883aa27300b
and the certificate returned to Aₖ₊₁ would read:

| | |
|---|---|
| Transaction Number | 1329 |
| Client ID Number | 201 |
| Time | 19:57:52 Greenwich Mean Time |
| Date | 06 March 1991 |
| Certificate Number | d9bb1b11d58bb09c2763e7915fbb83ad |

When, at a later date, author, Aₖ₊₁, desires to prove the authenticity of document, Dₖ₊₁, as that which was received and dated by the TSA on 6 March 1991 at 19:57:52, the records of the TSA are examined to obtain the catenate certificate value, Cₖ, of the next previous transaction, 1328, which appears as:
46f7d75f0fbea95e96fc38472aa28ca1
The alleged document is then reduced to the form in which it was transmitted to the TSA, e.g, as its hash, and this value is then concatenated with Cₖ and the remaining data from the certificate of Aₖ₊₁. The resulting composite, assuming the alleged document to be authentic, now appears as:
46f7d75f0fbea95e96fc38472aa28ca1, 1329,
195752GMT06MAR1991, 201, 882653ee04d511dbb5e06883aa27300b
which, when hashed, produces the correct catenate certificate value:
d9bb1b11d58bb09c2763e7915fbb83ad
thereby proving the alleged document to be Dₖ₊₁. Otherwise, a revised document would hash to a different value and the composite of which it is an element would hash to a catenate certificate value different from that stated in the certificate of transaction number 1329.

If further proof were demanded, for example upon an adversary allegation that Cₖ₊₁ had been falsified after the fact of a document revision, the certificate and the submitted, e.g. hashed, document of Aₖ, who is identified from TSA records, would be employed in an attempt to regenerate the subsequent, questioned certificate value, Cₖ₊₁. If that value were correct, Dₖ₊₁ would be proved. As an alternative, the certificate value, Cₖ₊₁, could be proved by the regeneration of the subsequent catenate certificate value, Cₖ₊₂, from the certificate data and submitted document of Aₖ₊₂, since no feasible revision could be made to that later document which would result in a match of Cₖ₊₂ if Cₖ₊₁ were not the same as existed at the time of the transaction, 1330, processing Dₖ₊₂.

In the more general record catenation procedure depicted in FIG. 4 the documents in a growing series are processed, within an organization or by a TSA, as each is generated. At step 51, a new document representation, such as would be generated by a hashing deterministic function algorithm, becomes available and, at step 52, is concatenated with the current record catenate value that was generated in the processing of the previous document. This composite is then processed, e.g., hashed, at step 53, to generate the new catenate value for the present document. This value may be separately recorded and utilized for inclusion in a certificate, or simply retained in the processing system for application to the next document which is presented at step 54. The subsequent processing steps 55, 56 are applied to this document representation, and the process repeats with each new document in its turn.

## Claims

1. A method of time-stamping a digital document which comprises transmitting in a communications network to an outside agency a digital representation of said digital document, creating at said outside agency a receipt comprising a digital representation of then current time and at least a portion of a digital representation of said digital document, and certifying said receipt at said outside agency
**characterized in that**
the certifying of said receipt comprises including with said receipt a time representation and digital document representation specific to at least one other digital document receipted by said outside agency.

2. A method of time-stamping a digital document according to claim 1
**characterized in that**
the digital representation of said digital document comprises at least a portion of the digital representation of the value derived by application of a deterministic function algorithm to said digital document.

3. A method of time-stamping a digital document according to claim 2
**characterized in that**
said digital value representation is derived from the application of a one-way hashing algorithm to said digital document.

4. A method of time-stamping a digital document according to claim 1
**characterized in that**
the certifying of said receipt comprises generating a catenate certificate value for said receipt by:
a) concatenating a digital representation of said receipt with a representation of a prior catenate certificate value to form a composite; and
b) applying a deterministic function algorithm to said composite.

5. A method of time-stamping a digital document according to claim 4
**characterized in that**
the deterministic function algorithm applied to said composite comprises a one-way hashing algorithm.

6. A method of time-stamping a digital document according to claim 4
**characterized in that**
said outside agency maintains a record comprising the catenate certificate values of prior time-stamping transactions.

## Patentansprüche

1. Verfahren zur Zeitstempelung eines digitalen Dokuments, umfassend das Senden einer digitalen Darstellung des digitalen Dokuments in einem Kommunikationsnetz an eine Außenstelle, Erzeugen einer Empfangsquittung in der Außenstelle, die eine digitale Darstellung der momentanen Zeit und wenigstens einen Abschnitt einer digitalen Darstellung des digitalen Dokuments enthält, und Beglaubigen der Empfangsquittung in der Außenstelle,
**dadurch gekennzeichnet**, daß
das Beglaubigen der Empfangsquittung das Aufnehmen in die Empfangsquittung einer Darstellung der Zeit und einer Darstellung eines digitalen Dokuments, die für wenigstens ein weiteres von der Außenstelle quittiertes digitales Dokument spezifisch sind, umfaßt.

2. Verfahren zur Zeitstempelung eines digitalen Dokuments nach Anspruch 1,
**dadurch gekennzeichnet**, daß
die digitale Darstellung des digitalen Dokuments wenigstens einen Abschnitt der digitalen Darstellung des Wertes enthält, der durch Anwenden eines Algorithmus einer deterministischen Funktion auf das digitale Dokument abgeleitet wird.

3. Verfahren zur Zeitstempelung eines digitalen Dokuments nach Anspruch 2,
**dadurch gekennzeichnet**, daß
die Darstellung des digitalen Wertes aus der Anwendung eines Einweg-Hash-Algorithmus auf das digitale Dokument abgeleitet wird.

4. Verfahren zur Zeitstempelung eines digitalen Dckuments nach Anspruch 1,
**dadurch gekennzeichnet**, daß
das Beglaubigen der Empfangsquittung die Erzeugung eines Verkettungsbeglaubigungswerts für den Empfang durch:
a) Verketten einer digitalen Darstellung der Empfangsquittung mit einer Darstellung eines früheren Verkettungsbeglaubigungswerts zur Bildung eines Verbundes; und
b) Anwenden eines Algorithmus einer deterministischen Funktion auf den Verbund
umfaßt.

5. Verfahren zur Zeitstempelung eines digitalen Dokuments nach Anspruch 4,
**dadurch gekennzeichnet**, daß
der Algorithmus einer deterministischen Funktion, der auf den Verbund angewendet wird, einen Einweg-Hash-Algorithmus enthält.

6. Verfahren zur Zeitstempelung eines digitalen Dokuments nach Anspruch 4,
**dadurch gekennzeichnet**, daß
die Außenstelle eine Aufzeichnung, die die Verkettungsbeglaubigungswerte früherer Zeitstempelungstransaktionen enthält, aufrechterhält.

## Revendications

1. Procédé d'horodatage d'un document numérique qui comprend la transmission dans un réseau de communications à une agence extérieure d'une représentation numérique dudit document numérique, la création à ladite agence extérieure d'un reçu comprenant une représentation numérique de l'heure en cours alors et au moins une partie d'une représentation numérique dudit document numérique, et la certification dudit reçu à ladite agence extérieure, caractérisé en ce que la certification dudit reçu comprend le fait d'inclure avec ledit reçu une représentation de l'heure et une représentation de document numérique spécifiques à au moins un autre document numérique reçu par ladite agence extérieure.

2. Procédé d'horodatage d'un document numérique selon la revendication 1, caractérisé en ce que la représentation numérique dudit document numérique comprend au moins une partie de la représentation numérique de la valeur dérivée par l'application d'un algorithme de fonction déterministique audit document numérique.

3. Procédé d'horodate d'un document numérique selon la revendication 2, caractérisé en ce que ladite représentation de valeur numérique est dérivée de l'application d'un algorithme de hachage unidirectionnel audit document numérique.

4. Procédé d'horodatage d'un document numérique selon la revendication 1, caractérisé en ce que la certification dudit reçu comprend la génération d'une valeur de certificat chaînée pour ledit reçu :
a) en enchaînant une représentation numérique dudit reçu avec une représentation d'une valeur de certificat chaînée antérieure pour former un composite; et
b) en appliquant un algorithme de fonction déterministique audit composite.

5. Procédé d'horodatage d'un document numérique selon la revendication 4, caractérisé en ce que l'algorithme de fonction déterministique appliqué audit composite comprend un algorithme de hachage unidirectionnel.

6. Procédé d'horodatage d'un document numérique selon la revendication 4, caractérisé en ce que ladite agence extérieure maintient un état comprenant les valeurs de certificat chaînées de transactions d'horodatage antérieures.
